# EUROPÄISCHE PATENTSCHRIFT

(11) **EP 2 236 889 B1**
(45) Veröffentlichungstag und Bekanntmachung des Hinweises auf die Patenterteilung: **22.08.2012**
(21) Anmeldenummer: 10152740.6
(22) Anmeldetag: 05.02.2010
(51) Int. Cl.: F16L 13/14

(54) **Fitting zum Anschluss eines Rohres**
Fitting for connecting a tube
Raccord destiné au raccordement d'un tuyau

(30) Priorität: 31.03.2009 DE 102009015186
(43) Veröffentlichungstag der Anmeldung: 06.10.2010
(73) Patentinhaber: VIEGA GmbH & Co. KG, 57439 Attendorn (DE)
(72) Erfinder: Mester, Reiner, 57368 Lennestadt (DE)
(74) Vertreter: Cohausz & Florack

(56) Entgegenhaltungen:
- EP-A1- 1 045 041
- EP-A2- 0 797 037
- WO-A1-2008/007396
- DE-B- 1 187 870
- DE-C1- 10 013 568

## Beschreibung

Die Erfindung betrifft einen Fitting zum Anschluss eines Rohres, insbesondere für den Installationsbereich, sowie ein entsprechendes Verpressungssystem mit einem solchen Fitting und mit einem vor dem Verpressen anlegbaren und nach dem Verpressen abnehmbaren Presswerkzeug.

Im Sinne der Erfindung ist mit einem Fitting ein von einem Medium, beispielsweise einem Gas oder einer Flüssigkeit, durchströmbarer und, zumindest abschnittsweise, im Wesentlichen zylinderförmiger Hohlkörper gemeint, der mit einem Rohrende eines Leitungssystems verbindbar ist. Der Fitting kann auch mehrere, beispielsweise zwei, miteinander verbundene und im Wesentlichen zylinderförmige Hohlkörper aufweisen, deren Längsachsen auch winkelig zueinander verlaufen können, um dadurch beispielsweise ein winkliges Rohranschlussstück (Rohrbogen) zu bilden. Im Folgenden wird der Einfachheit halber immer nur ein Hohlkörper und dessen besondere Ausgestaltung erwähnt, obwohl im Sinne der Erfindung ein Fitting auch mehrere Hohlkörper aufweisen kann, die insbesondere auch alle auf dieselbe Weise ausgestaltet sind.

Um den Anschluss eines Rohres möglichst zu vereinfachen, wird vermehrt die Presstechnik verwendet. Zu diesem Zweck weist der zum Anschluss des Rohres dienende Hohlkörper mindestens einen Verpressungsabschnitt auf, der nach dem Einschieben des Rohrendes in den Hohlkörper mit Hilfe eines Presswerkzeugs derart plastisch umgeformt wird, dass der Fitting im Bereich des Verpressungsabschnitts mit dem Rohr einen Presssitz eingeht.

Besonders hervorzuheben ist dabei, dass das Presswerkzeug eine von der Pressverbindung unabhängige separate Einrichtung ist, die vor dem Verpressen im Bereich des Verpressungsabschnitts angelegt wird - indem beispielsweise zwei Pressbacken den Verpressabschnitt radial umgreifen - und die nach dem Verpressen wieder vollständig entfernt wird, so dass die Pressverbindung nur noch den Fitting und das Rohrende umfasst, nicht aber mehr das Presswerkzeug. Ein Fitting für diese Art von Verpresstechnik, auch Pressanschluss genannt, muss also aus einem Material bestehen, das sich durch Kaltumformen beim Verpressen so verformt, dass auch nach dem Abnehmen des Presswerkzeugs eine ausreichend feste und dichte Verbindung gewährleistet ist. Es kommt daher bei dieser Art von Verbindung, wie im Folgenden noch näher erläutert wird, in besonderem Maße auf mechanische Kennwerte wie Dehngrenze, Zugfestigkeit, Bruchdehnung und Elastizitätsmodul an. Die mechanischen Kennwerte müssen in einer solchen Weise gewählt sein, dass die Rückstelleigenschaften möglichst gering und die Ausreißfestigkeit bzw. die Druckfestigkeit möglichst hoch ist. Beispiele für einen Fitting bzw. Pressanschluss, bei dem nach dem Verpressen das Presswerkzeug wieder entfernt wird, finden sich in der DE 100 13 568 C1, in der WO 2008/103315 A2, der WO 91/14894 A1, der DE 1 187 870 A, der EP 0 797 037 A2 und der DE 2 233 102 A. Eine völlig andere Art der Verbindung zeigt hingegen die DE 102 07 201 A1, bei der zwar auch ein Verpressungsabschnitt in radialer Richtung verformt wird, jedoch nicht von einem abnehmbaren Presswerkzeug, sondern von einer auf den Verpressungsabschnitt aufzuschraubenden Presshülse, die zur Gewährleistung einer festen und dichten Verbindung zwingend mit dem übrigen Fitting verbunden bleiben muss. Im Vergleich zu dem Fitting und der Verbindungsart, von dem bzw. der die vorliegende Erfindung ausgeht, spielen bei letztgenanntem Stand der Technik die mechanischen Kennwerte des Materials nur eine untergeordnete Rolle, wobei insbesondere die Rückstelleigenschaften keine Bedeutung haben, da der Verpressungsabschnitt ohnehin dauerhaft von der Presshülse an das Rohrende gepresst wird.

Das Dokument WO 2008/007396 A1 offenbart die Merkmale des Oberbegriffs von Anspruch 1.

Bei dem Stand der Technik, von dem die Erfindung dagegen ausgeht, wurde in der Vergangenheit häufig sogenannter Rotguss als Material für den Fitting eingesetzt, das heißt eine Legierung auf Kupfer-Basis mit Anteilen an Silizium, Zink sowie Blei und Zinn. Zur Erhöhung der Festigkeit ist es auch bekannt, den Fitting aus einer Rotguss ähnlichen CuSiZn-Legierung, die frei von Blei und Nickel ist, herzustellen. Durch den Verzicht auf Blei und Nickel in der Legierung ergeben sich aber deutlich unterschiedliche mechanische Eigenschaften im Vergleich zu herkömmlichen Rotguss-Legierungen. Unterschiede bestehen insbesondere bei den für den vorliegenden Fitting bzw. Pressanschluss relevanten mechanischen Kennwerten wie Dehngrenze, Zugfestigkeit, Bruchdehnung und Elastizitätsmodul. Mit der höheren Festigkeit sind höhere Umformkräfte und damit höhere Presswerkzeugdrücke verbunden. Auch weist der Fitting bzw. Pressanschluss im Vergleich zum herkömmlichen Rotguss größere Rückstelleigenschaften auf, das heißt nach dem Abnehmen des Presswerkzeugs bewegt sich der Verpressungsabschnitt in radialer Richtung weiter zurück in Richtung der Ausgangsstellung als dies im Falle einer herkömmlichen Rotguss-Legierung der Fall ist. Die erreichten Pressmaße sind größer, die Ausreißfestigkeit bzw. Druckfestigkeit ist dadurch geringer und das Setzverhalten (Schlupf) ist größer. Um die größeren Presskräfte zu kompensieren, ist eine Reduzierung der Wandstärke erforderlich. Durch die verringerte Wandstärke verliert der Fitting bzw. Pressanschluss wiederum nochmals an Innendruckfestigkeit und das Schlupfverhalten wird noch größer. Der Schlupfweg ist aber im Geltungsbereich der verpressbare Rohrleitungssysteme aus Kupfer- und Kupferlegierungen betreffenden Norm IAPMO PS 117 (IAPMO, International Association of Plumbing and Mechanical Officials) begrenzt und kann von Standard-Pressanschlüssen aus der genannten Rotguss-ähnlichen Legierung (mit glatter innerer Oberfläche) nicht eingehalten werden.

Um das Setzverhalten zu verbessern und insbesondere den Schlupfweg zu reduzieren, ist es aus den zuvor genannten Dokumenten für einen Fitting aus einer herkömmlichen Legierung, nicht aber aus der neuen blei- und nickelfreien Rotguss-Legierung, bekannt, im Innern des Verpressungsabschnitts lose Schneidringe oder fest angeformte Schneiden oder Rippen vorzusehen, die sich beim Verpressen in die Oberfläche des eingeschobenen Rohrendes einkerben bzw. einschneiden (Schneidringe bzw. Schneiden) oder die Oberfläche des Rohrendes radial eindrücken (Rippen). Auf diese Weise wird bei einem Fitting einer herkömmlichen Legierung nach dem Verpressen eine axiale Fixierung des Rohres erreicht. Diese Art der axialen Fixierung hat sich aber bei besagter blei- und nickelfreien Rotguss-Legierung als nicht ausreichend erwiesen. Insbesondere bei hohen Drücken im Leitungssystem kann es dazu kommen, dass sich die Verbindung zwischen Fitting und Rohrende lockert, was zu unerwünschten Undichtigkeiten im Verbindungsbereich führen kann.

Es ist daher die Aufgabe der vorliegenden Erfindung, einen Fitting und ein entsprechendes Verpressungssystem bereitzustellen, dass auch bei Verwendung besagter blei- und nickelfreier Rotguss-Legierung eine ausreichende Dichtigkeit gewährleistet.

Die zuvor hergeleitete und aufgezeigte Aufgabe wird gemäß einer ersten Lehre der vorliegenden Erfindung gelöst durch einen Fitting zum Anschluss eines Rohres, insbesondere für den Installationsbereich, wobei der Fitting einen sich in eine Rohreinschubrichtung um eine Längsachse erstreckenden Hohlkörper aufweist, wobei der Hohlkörper mindestens einen Verpressungsabschnitt aufweist, der mit einem vor dem Verpressen anlegbaren und nach dem Verpressen abnehmbaren Presswerkzeug in radialer Richtung plastisch verformbar ist, wobei der Verpressungsabschnitt einen radial nach außen hervorstehenden, umlaufenden Wulst aufweist, der innenseitig eine Nut zur Aufnahme eines Dichtrings bildet, wobei der verpressungsabschnitt ferner mindestens zwei Schneiden aufweist, die innenseitig mit dem Hohlkörper fest verbunden sind und jeweils eine von einer ersten Schneidenfläche und einer zweiten Schneidenfläche gebildete Schneidkante aufweisen, wobei eine Schneide bezogen auf die Rohreinschubrichtung vor dem Wulst angeordnet ist, und wobei eine weitere Schneide bezogen auf die Rohreinschubrichtung hinter dem Wulst angeordnet ist.

Gerade bei Verwendung einer blei- und nickelfreien CuSiZn-Legierung hat dieser Fitting bzw. Pressanschluss folgende Vorteile: Zum einen wird eine optimale Dichtigkeit dadurch erreicht, dass ein umlaufender Wulst mit einem innenseitig einlegbaren Dichtring im Verpressungsabschnitt vorgesehen ist, der auch die größere Rückstelleigenschaft gegenüber herkömmlichen Rotguss-Legierungen kompensieren kann. Ferner graben sich beim Verpressen die mindestens zwei Schneiden in die Rohroberfläche ein, wodurch eine axiale Fixierung des Rohres relativ zum Fitting erreicht wird. Da die beiden Schneiden beidseitig des Wulstes angeordnet sind, sind diese zwangsläufig so weit voneinander beabstandet, dass beide Schneiden optimal in die Rohroberfläche eingreifen können, ohne dass die von der einen Schneide bewirkte Verformung der Rohroberfläche die Wirkung (das Einkerben bzw. Einschneiden) der anderen Schneide nennenswert beeinflussen könnte. Die axiale Sicherung und damit die Dichtigkeit wird dadurch noch weiter erhöht. Durch die Anordnung der beiden Schneiden rechts und links des Wulstes ergibt sich auch noch der Vorteil, dass durch das Einkerben bzw. Einschneiden der Schneiden in die Rohroberfläche das Rohrende gleichmäßig zu beiden Seiten des im Wulst verlaufenden Dichtrings am Fitting verankert wird, was wiederum auch die Dichtwirkung weiter erhöht.

Um eine axiale Fixierung auch bei einem hohen Leitungsinnendruck optimal zu gewährleisten, ist gemäß einer Ausgestaltung des erfindungsgemäßen Fittings vorgesehen, dass im unverpressten Zustand der Winkel zwischen beiden Schneidenflächen mindestens einer der Schneiden mindestens 90°, insbesondere mindestens 95°, vorzugsweise mindestens 100°, beträgt. Ein Winkel von dieser Größe führt zu einer erhöhten Stabilität der Schneiden, so dass diese sich beim Verpressen nicht ohne weiteres verformen können, sondern sich optimal in die Rohroberfläche einkerben bzw. einschneiden und dort verankern.

Alternativ oder zusätzlich kann auch vorgesehen sein, dass im unverpressten Zustand der Winkel zwischen einer der Schneidenflächen, vorzugsweise der in Rohreinschubrichtung weisenden Schneidenfläche, mindestens einer der Schneiden und der Längsachse mehr als 45°, insbesondere mehr als 60°, vorzugsweise mehr als 75°, beträgt. Ein solcher Winkel gewährleistet, dass sich die jeweilige Schneide bei hoher axialer Belastung nicht ohne Weiteres aus der Vertiefung, die die Schneide beim Verpressen in der Rohroberfläche erzeugt hat, herausbewegen kann.

Die Symmetrieachse (Mittellinie) zwischen den beiden Schneidenflächen mindestens einer der Schneiden kann, unabhängig vom Winkel zwischen beiden Schneidenflächen, in Rohreinschubrichtung geneigt sein, insbesondere derart, dass der Winkel zwischen dieser Symmetrieachse und der Längsachse (Rohreinschubrichtung) kleiner als 80°, insbesondere kleiner als 70°, vorzugsweise kleiner als 60°, beträgt, um eine verbesserte Haltefunktion zu gewährleisten und ein Herausgleiten des Rohres aus dem Pressanschluss zu vermeiden. Vorzugsweise sind die Schneiden außerdem scharfkantig und spitzwinklig.

Gemäß einer weiteren Ausgestaltung des erfindungsgemäßen Fittings sind die Schneiden am Hohlkörper angeformt, beispielsweise angeschweißt, oder einstückig mit diesem ausgeführt. Auf diese Weise sind die Schneiden besonderes einfach herstellbar.

Gemäß noch einer weiteren Ausgestaltung des erfindungsgemäßen Fittings ist dieser frei von Aufnahmen für separate Schneidringe. Aufgrund der erfindungsgemäß vorgesehen und besonders ausgestalteten Schneiden ist es möglich, auf separate Schneideringe vollständig zu verzichten. Dadurch entfallen auch die entsprechenden Aufnahmen für solche separaten Schneidringe, die ansonsten zu einer Querschnittsschwächung der ohnehin aufgrund der hohen Festigkeit relativ dünn auszuführenden Wandstärke des Fittings zu einer unvorteilhaften Querschnittsschwächung führen würden. Anders ausgedrückt kann erfindungsgemäß die Wandstärke des Fittings besonders stark reduziert werden, ohne dass zusätzliche Aufnahmen für Schneidringe die Stabilität, insbesondere die Ausreißfestigkeit bzw. Druckfestigkeit, negativ beeinflussen können.

Die Schneidkanten sind gemäß einer weiteren Ausgestaltung derart ausgebildet, dass sie sich beim Verpressen in die Oberfläche eines in den Fitting eingeschobenen Rohres einkerben bzw. einschneiden. Einkerben bzw. einschneiden bedeutet, dass die Schneidkanten so scharfkantig sind, dass sie die Rohroberfläche am Berührungspunkt zerschneiden. Stumpfe Schneiden, das heißt Rippen, drücken dagegen die Rohroberfläche lediglich ein. Ein Einkerben bzw. Einschneiden führt zu einer verbesserten Verankerung der Schneiden in der Rohroberfläche, wodurch nicht nur die axiale Sicherung verbessert, sondern auch die Dichtigkeit erhöht wird.

Die erfindungsgemäß vorgesehene Anordnung und Ausbildung der Schneiden hat den Vorteil, dass jede Schneide optimal wirken kann, ohne dass die eine Schneide die Funktion der anderen Schneide negativ beeinflussen könnte. Auf diese Weise reichen gemäß einer weiteren Ausgestaltung des erfindungsgemäßen Fittings je Verpressungsabschnitt genau zwei Schneiden aus, um eine optimale Fixierung in axialer Richtung zu gewährleisten. Es ist also danach genau eine Schneide zwischen dem vorderen Ende des Fittings (Rohreinschubende) und dem Wulst angeordnet und genau eine weitere Schneide zwischen dem Wulst und dem anderen Ende des Fittings bzw. Verpressungsabschnitts. Insbesondere kann innenseitig, vorzugsweise innerhalb des Verpressungsabschnitts, ein Anschlag für das Rohrende vorgesehen sein und die weiter innen liegende Schneide zwischen Wulst bzw. Nut und dem besagten Anschlag angeordnet sein.

Die Schneidenflächen müssen nicht zwangsläufig alle winkelig zur Längsachse bzw. zur Rohreinschubrichtung verlaufen. Eine der Schneidenflächen kann im unverpressten Zustand auch parallel zur Längsachse verlaufen. Auf diese Weise kann durch Einbringen nur einer einzigen umlaufenden Vertiefung im Innern des Verpressungsabschnitts bereits die jeweilige Schneide hergestellt werden, was die Herstellung der Schneiden deutlich vereinfacht. Bei geeignetem Ansetzen des Presswerkzeugs, was im Folgenden noch näher erläutert wird, am Verpressungsabschnitt, nämlich derart, dass die jeweilige Schneide genau innerhalb der radialen Projektionsfläche eines Pressstegs des Presswerkzeugs liegt, wird erreicht, dass sich die Schneide auch dann optimal in die Rohroberfläche eingräbt, wenn die eine Schneidenfläche im unverpressten Zustand parallel zur Längsachse verläuft. Durch die Einwirkung des Presswerkzeugs wird vorzugsweise erreicht, dass sich die Schneide gegenüber ihrer Ausgangslage im unverpressten Zustand etwas verdreht und so tiefer in die Rohroberfläche eingräbt.

Um das Rohr beim Einschieben optimal zu führen und um im verpressten Zustand zur Unterstützung der axialen Fixierung und Dichtigkeit eine möglichst große Kontaktfläche zwischen Fitting und Rohroberfläche zu erreichen, ist gemäß einer weiteren Ausgestaltung des Fittings vorgesehen, dass sich beidseitig an den Wulst innenseitig jeweils ein Rohranlageabschnitt anschließt, dessen innere Oberfläche im unverpressten Zustand parallel zur Längsachse verläuft. Durch Vorsehen eines Rohranlageabschnitts, der sich beidseitig unmittelbar an den Wulst anschließt, wird auch der Abstand zwischen den mindestens zwei Schneiden auf ein Maß erhöht, dass sich diese beim Verpressen besonders wenig gegenseitig beeinflussen können. Die Rohranlageabschnitte sind vorzugsweise innen glattwandig, das heißt sie weisen keine Schneiden, Rippen oder andere Unebenheiten auf. Beide Rohranlageabschnitte haben dabei insbesondere den gleichen Innendurchmesser.

Wie bereits zuvor angedeutet, kann eine der Schneidenflächen jeweils einer Schneide dadurch hergestellt werden, dass innenseitig eine Vertiefung im Verpressungsabschnitt vorgesehen ist. Gemäß einer Ausgestaltung des erfindungsgemäßen Fittings ist zu beiden Seiten des Wulstes innenseitig jeweils eine Vertiefung mit zwei Seitenwänden und ggf. einem Boden vorgesehen, wobei eine der Seitenwände eine der Schneidenflächen bildet. Die Herstellung der Schneiden wird auf diese Weise besonders einfach möglich. Die Vertiefung kann im Querschnitt auch, zumindest abschnittsweise, rund oder dreieckig ausgebildet sein. Die jeweilige Vertiefung schließt sich vorzugsweise unmittelbar an einen Rohranlageabschnitt an. Insbesondere wird dabei die jeweils andere Schneidenfläche, die nicht von der Vertiefung gebildet wird, von einem Teil des dazu benachbarten Rohranlageabschnitts gebildet.

Da wie bereits erwähnt die Wandstärke aufgrund der relativ hohen Festigkeit der blei- und nickelfreien Rotguss-Legierung möglichst weit reduziert werden sollte, ist es vorteilhaft, wenn die Vertiefungen, mit denen jeweils eine der Schneidflächen erzeugt wird, möglichst zu keiner nennenswerten Querschnittsschwächung führen, also möglichst flach sind. Gemäß einer Ausgestaltung des erfindungsgemäßen Fittings ist daher die Tiefe mindestens einer der Vertiefungen kleiner als die Tiefe der im Wulst gebildeten Nut zur Aufnahme des Dichtrings. Dabei kann die Tiefe mindestens einer der Vertiefungen mindestens zweimal, insbesondere mindestens fünfmal, vorzugsweise mindestens zehnmal kleiner als die Tiefe der im Wulst gebildeten Nut sein.

Damit auch die relativ tiefe Nut im Wulst nicht zu einer nennenswerten Querschnittsschwächung führt, ist es vorteilhaft, wenn die Wandstärke des Fittings im Bereich des Wulstes gleichmäßig ist. Insbesondere ist die Wandstärke im Bereich des Wulstes mindestens so groß wie im Bereich der die jeweilige Schneidenfläche bildenden Vertiefung oder im Bereich des bzw. der benachbarten Rohranlagenabschnitte. Vorzugsweise ist der Wulst, das heißt die Nut, innen glattwandig, weist also keine Schneiden, Rippen oder andere Unebenheiten auf.

Es sei hervorgehoben, dass die vorangehend beschriebenen Merkmale betreffend die Anordnung und Ausgestaltung mindestens einer der Schneiden vorzugsweise auch auf alle Schneiden zutreffen können.

Gemäß einer zweiten Lehre der vorliegenden Erfindung wird die Aufgabe ferner gelöst durch ein Verpressungssystem zum Anschluss eines Rohres, insbesondere für den Installationsbereich, mit einem Fitting, wie er zuvor beschrieben wurde, und mit einem vor dem Verpressen anlegbaren und nach dem Verpressen abnehmbaren Presswerkzeug. Mit anderen Worten weist das Verpressungssystem ein Presswerkzeug auf, welches nur vorübergehend zum Zwecke des Verpressens mit dem Fitting, insbesondere mit dem Verpressungsbereich, in Kontakt kommt, anschließend aber wieder entfernt wird, ohne dadurch die erzeugte Verbindung und Dichtigkeit zu beeinflussen.

Das Presswerkzeug kann mindestens zwei Pressbacken aufweisen, die beim Verpressen senkrecht zur Längsachse, gemeint ist die Längsachse des Fittings, aufeinander zu bewegt werden können. Mindestens zwei der Pressbacken können jeweils mindestens zwei Pressstege aufweisen, die in radialer Richtung aus der übrigen Pressbacke hervorstehen. Diese Pressstege kommen gemäß einer Ausgestaltung des erfindungsgemäßen Verpressungssystem beim Verpressen derart außen am Fitting im Verpressungsabschnitt zur Anlage, dass die Schneiden, insbesondere die Schneidkanten, innerhalb der radialen Projektionsfläche der Pressstege angeordnet sind. Auf diese Weise wird einerseits genau im Bereich der Schneidkanten der maximale Druck aufgebaut. Andererseits kann auf diese Weise erreicht werden, dass sich beim Verpressen die Schneide etwas gegenüber ihrer Ausgangsstellung um eine Achse quer zur Längsachse des Fittings verdreht und dadurch tiefer in die Rohroberfläche eingräbt. Dabei ist es besonders bevorzugt, wenn gemäß einer weiteren Ausgestaltung des Verpressungssystems nur eine Schneide, insbesondere nur eine Schneidkante, innerhalb der radialen Projektionsfläche eines der Pressstege angeordnet ist.

Es gibt nun eine Vielzahl von Möglichkeiten, den erfindungsgemäßen Fitting und das erfindungsgemäße Verpressungssystem auszugestalten und weiterzubilden. Hierzu sei einerseits verwiesen auf die dem Patentanspruch 1 nachgeordneten Patentansprüche, andererseits auf die Beschreibung eines Ausführungsbeispiels in Verbindung mit der Zeichnung. In der Zeichnung zeigt:
- Fig. 1a): eine Schnittansicht eines Fittings gemäß der vorliegenden Erfindung,
- Fig. 1b): eine Draufsicht auf den Fitting gemäß Fig. 1a),
- Fig. 2a): eine Detailvergrößerung einer Schneide aus dem Ausführungsbeispiel gemäß Fig. 1a),
- Fig. 2b): eine entsprechende Detailvergrößerung bei einem anderen Ausführungsbeispiel eines Fittings und
- Fig. 3: eine Schnittansicht eines Ausführungsbeispiels eines erfindungsgemäßen Verpressungssystems.

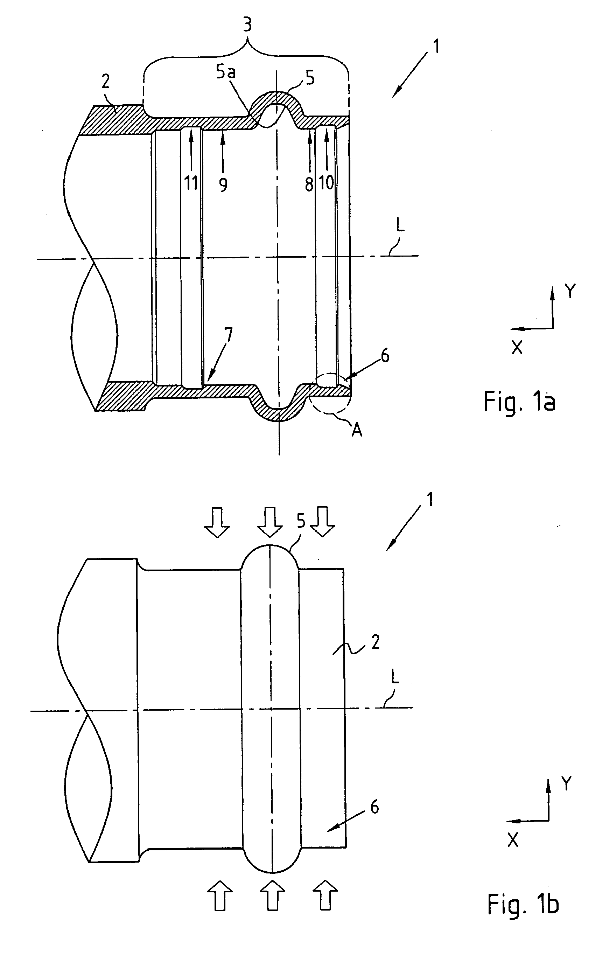

Die Figuren 1a) und b) zeigen einen Fitting 1 aus einer blei- und nickelfreien Rotguss-Legierung zum Anschluss eines Rohres (nicht dargestellt), insbesondere für den Installationsbereich, wobei der Fitting 1 einen sich in eine Rohreinschubsrichtung X um eine Längsachse L erstreckenden Hohlkörper 2 aufweist. Der Hohlkörper 2 weist einen Verpressungsabschnitt 3 auf, wobei in Fig. 1b) durch Pfeile die Pressbewegung der Pressbacken 12 eines entsprechend anzulegenden Presswerkzeugs 4 dargestellt ist. Beim Verpressen wird der Fitting 1 im Bereich des Verpressungsabschnitts 3 durch Kaltumformen in radialer Richtung Y plastisch verformt, so dass zwischen Rohr und Fitting ein Presssitz entsteht.

Der Verpressungsabschnitt 3 weist einen radial nach außen hervorstehenden, umlaufenden Wulst 5 auf, der innenseitig eine Nut 5a zur Aufnahme eines Dichtrings (nicht dargestellt) bildet.

Der Verpressungsabschnitt 3 weist ferner zwei Schneiden 6 und 7 auf, die innenseitig mit dem Hohlkörper 2 einstückig ausgeführt sind und jeweils eine von einer ersten Schneidenfläche 6a bzw. 7a und einer zweiten Schneidefläche 6b bzw. 7b gebildete Schneidkante 6c bzw. 7c aufweisen. Der Hohlkörper, von dem hier nur ein Ausschnitt dargestellt ist, ist im vorliegenden Fall durch Sandguss hergestellt. Denkbar ist grundsätzlich aber auch die Herstellung durch Strangguss oder durch Umformen, insbesondere Druckumformen, eines entsprechenden Rohrabschnitts. Nach dem Herstellen des Hohlkörpers sind die beiden Schneiden durch Zerspanen hergestellt worden.

Bei dem dargestellten Fitting 1 bzw. Pressanschluss sind lediglich zwei Schneiden vorgesehen. Die beiden Schneiden sind voneinander so weit beabstandet, dass die eine Schneide beim Verpressen nicht die Wirkung der jeweils anderen Schneide beeinflussen kann. Die eine Schneide 6 ist bezogen auf die Rohreinschubrichtung X vor dem Wulst 5 angeordnet und die anderen Schneide 7, ebenfalls bezogen auf die Rohreinschubrichtung X, hinter dem Wulst.

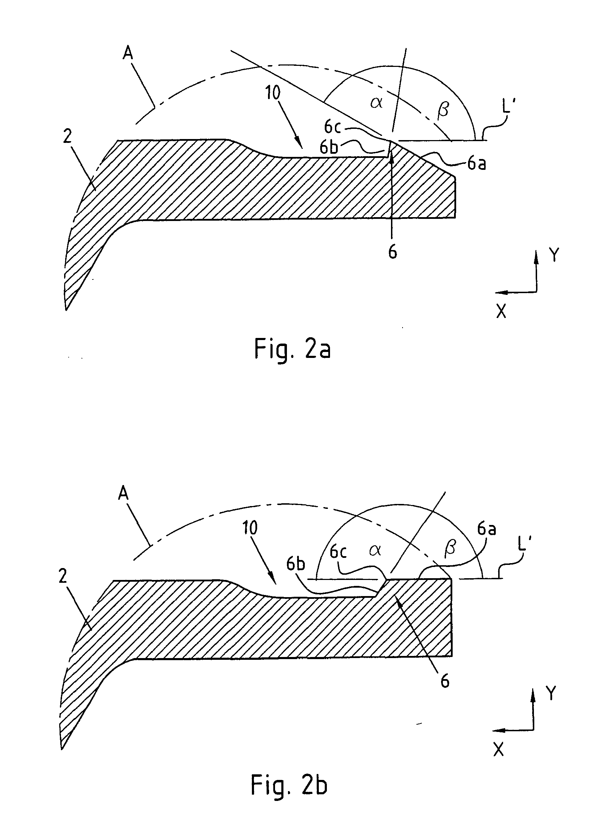

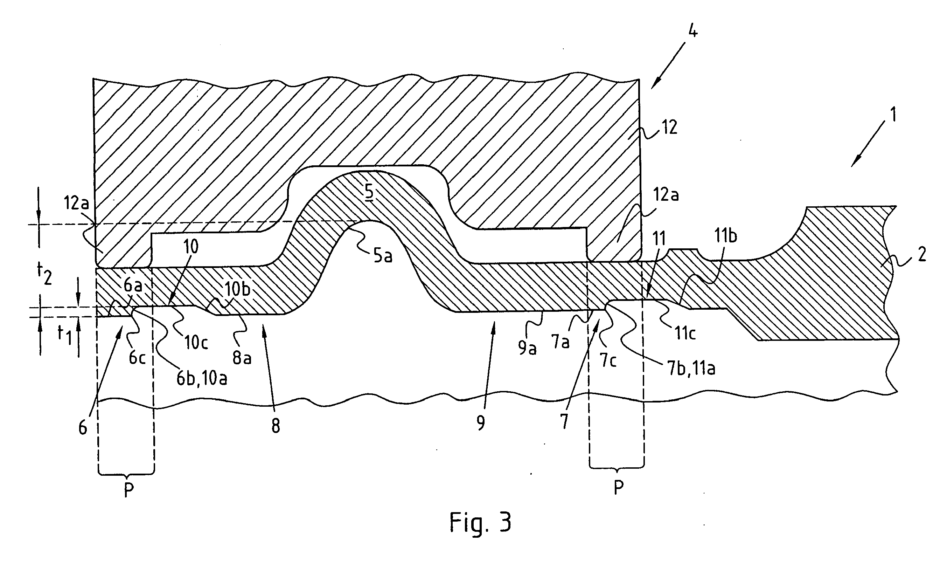

Die besondere Anordnung und Ausgestaltung der beiden Schneiden 6 und 7 wird im Folgenden anhand des Details A, welches in den Figuren 2a) und b) für unterschiedliche Beispiele dargestellt ist, beschrieben. Dabei ist in Fig. 2a) dasselbe Ausführungsbeispiel wie in Fig. 1a) dargestellt. In Fig. 2b) ist ein alternatives Ausführungsbeispiel dargestellt. Beide Ausführungsbeispiele zeigen jeweils nur die vordere, das heißt in Einschubsrichtung X erste Schneide 6. Die zweite Schneide 7 (in Figuren 2a) und b) nicht dargestellt) entspricht in ihrer Form dem Ausführungsbeispiel der ersten Schneide 6 in Fig. 2b). Die Schneide 7 ist auch in Fig. 3 dargestellt.

In Fig. 2a) beträgt im unverpressten Zustand der Winkel α zwischen den beiden Schneidenflächen 6a und 6b 70°. Ebenfalls im unverpressten Zustand beträgt der Winkel β zwischen der in Rohreinschubrichtung X weisenden Schneidenfläche 6b und der Längsachse L des Hohlkörpers 2 80°. Zur Darstellung des Winkels β ist aus Gründen der Übersichtlichkeit hier nur eine Parallele L' zur Längsachse L dargestellt. Die Schneidenfläche 6b ist dabei durch eine mittels Zerspanen nachträglich eingebrachte Vertiefung 10 erzeugt worden. Die Vertiefung 10 weist einen Boden 10c und zwei Seitenwände 10a und 10b auf, wobei die Seitenwand 10a besagte Schneidenfläche 6b bildet. Die aus den beiden Schneidenflächen 6a und 6b resultierende Schneidkante 6c ist scharfkantig und so ausgebildet, dass sie sich beim Verpressen in die Oberfläche eines in den Fitting 1 eingeschobenen Rohres (nicht dargestellt) eingräbt.

Das Ausführungsbeispiel in Fig. 2b) unterscheidet sich von dem in Fig. 2a) dargestellten dadurch, dass im unverpressten Zustand der Winkel α zwischen den beiden Schneidenflächen 6a und 6b 120° beträgt, wohingegen der Winkel β zwischen der Schneidenfläche 6b und der Längsachse L bzw. der Parallelen L' ebenfalls 60° beträgt. Im übrigen ist auch hier die Schneidenfläche 6b durch Aussparen einer Vertiefung 10, wie sie zuvor beschrieben wurde, erzeugt worden. Auch die hier resultierende Schneidkante 6c ist scharfkantig und gräbt sich beim Verpressen in die Oberfläche eines in den Fitting 1 eingeschobenen Rohres ein.

Fig. 3 zeigt ein Verpressungssystem mit einem Fitting 1, der dem Ausführungsbeispiel von Fig. 2b) entspricht, sowie mit einem Presswerkzeug 4, welches vor dem Verpressen anlegbar ist und nach dem Verpressen wieder entfernt wird.

Das Presswerkzeug 4 weist zwei Pressbacken 12 auf, von denen hier nur die obere Pressbacke dargestellt ist. Die Pressbacken 12 werden beim Verpressen senkrecht zur Rohreinschubrichtung X bzw. senkrecht zur Längsachse L aufeinander zu bewegt.

Die Pressbacken 12 weisen zwei Pressstege 12a auf, die voneinander beabstandet sind und die beim Verpressen derart außen am Fitting 1 im Verpressungsabschnitt 3 zur Anlage kommen, dass die Schneiden 6 und 7, insbesondere die Schneidenkanten 6c und 7c, innerhalb der radialen Projektionsfläche P der Pressstege 12a angeordnet sind.

Bei den Verpressungssystemen gemäß der vorliegenden Erfindung ist zwischen den beiden Pressstegen 12a in beiden Pressbacken 12 eine Ausnehmung 13 vorgesehen, die im Wesentlichen T-förmig ausgebildet ist, also einen tiefer ausgeschnittenen Abschnitt 13a und einen weniger tief ausgeschnittenen Abschnitt 13b aufweist. Dabei nimmt beim Anlegen des Presswerkzeugs 4 an den Fitting 1 der tiefere Abschnitt 13a den umlaufenden Wulst 5 auf, wodurch die Pressbacken 12 während des Verpressens relativ zum Fitting 1 bzw. Verpressungsabschnitt 3 automatisch so ausgerichtet werden, dass die Schneiden 6 und 7 jeweils innerhalb der radialen Projektionsflächen P der Pressstege 12 angeordnet sind.

Wie aus Fig. 3 ferner ableitbar ist, kerben bzw. schneiden sich beim Verpressen zunächst die Schneidkanten 6c und 7c in das eingeschobene Rohrende (nicht dargestellt) ein, wobei anschließend der Wulst 5 von dem tieferen Abschnitt 13a der Aussparung 13 umgeformt wird, hier zu einem Sechskant.

Wie schließlich auch deutlich in Fig. 3 zu erkennen ist, ist die Tiefe t₁ der beiden Vertiefungen 10 und 11 - die Tiefe t₁ beider Vertiefungen 10 und 11 ist hier identisch - kleiner als die Tiefe t₂ der im Wulst gebildeten Nut 5a. Genauer gesagt ist die Tiefe t₁ um den Faktor neun kleiner als die Tiefe t₂. Im Bereich des Wulstes 5 und im Bereich der sich beidseitig an den Wulst 5 innenseitig anschließenden Rohranlageabschnitte 8 und 9, deren innere Oberflächen 8a und 9a im unverpressten Zustand parallel zur Längsachse verlaufen, ist die Wandstärke, wie Fig. 3 zeigt, gleichmäßig. Die einzigen Querschnittsreduzierungen stellen damit die Vertiefungen 10 und 11 dar. Durch einen solchen Aufbau wird auch bei der für den Fitting 1 hier verwendeten blei- und nickelfreien Rotguss-Legierung eine hohe Stabilität, insbesondere eine hohe Ausreißfestigkeit bzw. Druckfestigkeit, erreicht.

## Patentansprüche

1. Fitting (1) zum Anschluss eines Rohres, insbesondere für den Installationsbereich,
- wobei der Fitting (1) einen sich in eine Rohreinschubrichtung (X) um eine Längsachse (L) erstreckenden Hohlkörper (2) aufweist,
- wobei der Hohlkörper (2) mindestens einen Verpressungsabschnitt (3) aufweist, der mit einem vor dem Verpressen anlegbaren und nach dem Verpressen abnehmbaren Presswerkzeug (4) in radialer Richtung (Y) plastisch verformbar ist,
- wobei der Verpressungsabschnitt (3) eine Nut (5a) zur Aufnahme eines Dichtrings aufweist,
- wobei der Verpressungsabschnitt (3) ferner mindestens zwei Schneiden (6,7) aufweist, die innenseitig mit dem Hohlkörper (2) fest verbunden sind und jeweils eine von einer ersten Schneidenfläche (6a,7a) und einer zweiten Schneidenfläche (6b,7b) gebildete Schneidkante (6c,7c) aufweisen,
**dadurch gekennzeichnet, dass** der Verpressungsabschnitt (3) einen radial nach außen hervorstehenden, umlaufenden Wulst (5) aufweist, der innenseitig die Nut (5a) bildet, - wobei eine Schneide (6) bezogen auf die Rohreinschubrichtung (X) vor dem Wulst (5) angeordnet ist, und - wobei eine weitere Schneide (7) bezogen auf die Rohreinschubrichtung (X) hinter dem Wulst (5) angeordnet ist.

2. Fitting (1) nach Anspruch 1, **dadurch gekennzeichnet, dass** im unverpressten Zustand der Winkel (α) zwischen beiden Schneidenflächen (6a,6b;7a,7b) mindestens einer der Schneiden (6,7) mindestens 90°, insbesondere mindestens 95°, vorzugsweise mindestens 100°, beträgt.

3. Fitting (1) nach Anspruch 1 oder 2, **dadurch gekennzeichnet, dass** im unverpressten Zustand der Winkel (β) zwischen einer der Schneidenflächen (6a,6b;7a,7b), vorzugsweise der in Rohreinschubrichtung (X) weisenden Schneidenfläche (6b,7b), mindestens einer der Schneiden (6,7) und der Längsachse (L) mehr als 45°, insbesondere mehr als 60°, vorzugsweise mehr als 75°, beträgt.

4. Fitting (1) nach einem der vorangehenden Ansprüche, **dadurch gekennzeichnet, dass** die Schneiden (6,7) am Hohlkörper (2) angeformt oder einstückig mit diesem ausgeführt sind.

5. Fitting (1) nach einem der vorangehenden Ansprüche, **dadurch gekennzeichnet, dass** der Fitting (1) frei von Aufnahmen für separate Schneidringe ist.

6. Fitting (1) nach einem der vorangehenden Ansprüche, **dadurch gekennzeichnet, dass** die Schneidkanten (6c,7c) derart ausgebildet sind, dass sie sich beim Verpressen in die Oberfläche eines in den Fitting (1) eingeschobenen Rohres einschneiden.

7. Fitting (1) nach einem der vorangehenden Ansprüche, **dadurch gekennzeichnet, dass** je Verpressungsabschnitt (3) genau zwei Schneiden (6,7) vorgesehen sind.

8. Fitting (1) nach einem der vorangehenden Ansprüche, **dadurch gekennzeichnet, dass** die eine Schneidenfläche (6a,7a) im unverpressten Zustand parallel zur Längsachse (L) verläuft.

9. Fitting (1) nach einem der vorangehenden Ansprüche, **dadurch gekennzeichnet, dass** sich beidseitig an den Wulst (5) innenseitig jeweils ein Rohranlageabschnitt (8,9) anschließt, dessen innere Oberfläche (8a,9a) im unverpressten Zustand parallel zur Längsachse (L) verläuft.

10. Fitting (1) nach einem der vorangehenden Ansprüche, **dadurch gekennzeichnet, dass** zu beiden Seiten des Wulstes (5) innenseitig jeweils eine Vertiefung (10,11) mit zwei Seitenwänden (10a,10b;11a,11b) und vorzugsweise einem Boden (10c;11c) vorgesehen ist, wobei eine der Seitenwände (10a,11a) eine der Schneidenflächen (6b,7b) bildet.

11. Fitting (1) nach Anspruch 10, **dadurch gekennzeichnet, dass** die Tiefe (t₁) mindestens einer der Vertiefungen (10,11) kleiner als die Tiefe (t₂) der im Wulst (5) gebildeten Nut (5a) zur Aufnahme des Dichtrings ist.

12. Fitting (1) nach Anspruch 11, **dadurch gekennzeichnet, dass** die Tiefe (t₁) mindestens einer der Vertiefungen (10,11) mindestens zweimal, insbesondere mindestens fünfmal, vorzugsweise mindestens zehnmal kleiner als die Tiefe (t₂) der im Wulst (5) gebildeten Nut (5a) zur Aufnahme des Dichtrings ist.

13. Fitting (1) nach einem der vorangehenden Ansprüche, **dadurch gekennzeichnet, dass** der Fitting (1) aus einer CuSiZn-Legierung, die frei von Blei und Nickel ist, besteht.

14. Verpressungssystem zum Anschluss eines Rohres, insbesondere für den Installationsbereich,
- mit einem Fitting (1) nach einem der vorangehenden Ansprüche und
- mit einem vor dem Verpressen anlegbaren und nach dem Verpressen abnehmbaren Presswerkzeug (4).

15. Verpressungssystem nach Anspruch 14, **dadurch gekennzeichnet, dass** das Presswerkzeug (4) mindestens zwei Pressbacken (12) aufweist, die beim Verpressen senkrecht zur Längsachse (L) aufeinander zu bewegt werden können, wobei mindestens zwei der Pressbacken (12) jeweils mindestens zwei Pressstege (12a) aufweisen, die beim Verpressen derart außen am Fitting (1) im Verpressungsabschnitt (3) zur Anlage kommen, dass die Schneiden (6,7), insbesondere die Schneidkanten (6c,7c), innerhalb der radialen Projektionsfläche (P) der Pressstege (12a) angeordnet sind.

16. Verpressungssystem nach Anspruch 15, **dadurch gekennzeichnet, dass** nur eine Schneide (6;7), insbesondere nur eine Schneidkante (6c;7c), innerhalb der radialen Projektionsfläche (P) eines der Pressstege (12a) angeordnet ist.

## Claims

1. A fitting (1) for connecting a pipe, in particular for the plumbing sector,
- wherein said fitting (1) has a hollow body (2) extending in a pipe insertion direction (X) about a longitudinal axis (L),
- wherein said hollow body (2) has at least one pressing section (3) which can be plastically deformed in a radial direction (Y) with a pressing tool (4) that can be positioned prior to pressing and can be removed after pressing,
- wherein the pressing section (3) comprises a groove (5a) for receiving a sealing ring,
- wherein the pressing section (3) further comprises at least two cutting blades (6, 7) which are fixedly connected on the inner side to the hollow body (2) and which have in each case a cutting edge (6c, 7c) formed by a first cutting blade face (6a, 7a) and a second cutting blade face (6b, 7b),
**characterized in that** the pressing section (3) comprises a radially outward protruding circumferential bead (5) which on the inside forms the groove (5a),
- wherein one cutting blade (6) is arranged, with regard to the pipe insertion direction (X), upstream of the bead (5), and
- wherein a further cutting blade (7) is arranged, with regard to the pipe insertion direction (X), downstream of the bead (5).

2. The fitting (1) according to claim 1, **characterized in that** in the unpressed state, the angle (α) between both cutting blade faces (6a, 6b; 7a, 7b) of at least one of the cutting blades (6, 7) is at least 90°, in particular at least 95°, preferably at least 100°.

3. The fitting (1) according to claim 1 or 2, **characterized in that** in the unpressed state, the angle (β) between one of the cutting blade faces (6a, 6b; 7a, 7b), preferably the cutting blade face (6b, 7b) pointing in the pipe insertion direction (X), of at least one of the cutting blades (6, 7) and the longitudinal axis (L) is more than 45°, in particular more than 60°, preferably more than 75°.

4. The fitting (1) according to any one of the preceding claims, **characterized in that** the cutting blades (6, 7) are molded on the hollow body (2) or are integrally formed with the latter.

5. The fitting (1) according to any one of the preceding claims, **characterized in that** the fitting (1) is free of receptacles for separate cutting rings.

6. The fitting (1) according to any one of the preceding claims, **characterized in that** the cutting edges (6c, 7c) are formed in such a manner that they cut during pressing into the surface of a pipe inserted in the fitting (1).

7. The fitting (1) according to any one of the preceding claims, **characterized in that** for each pressing section (3), exactly two cutting blades (6, 7) are provided.

8. The fitting (1) according to any one of the preceding claims, **characterized in that** in the unpressed state, the one cutting blade face (6a, 7a) runs parallel to the longitudinal axis (L).

9. The fitting (1) according to any one of the preceding claims, **characterized in that** on both sides of the bead (5), in each case one pipe contact section (8, 9) adjoins, the inner surface (8a, 9a) of which, in the unpressed state, runs parallel to the longitudinal axis (L).

10. The fitting (1) according to any one of the preceding claims, **characterized in that** on both sides of the bead (5), in each case one depression (10, 11) having two side walls (10a, 10b,; 11a, 11b) and preferably one bottom (10c; 11c) is provided on the inner side, wherein one of the side walls (10a, 11a) forms one of the cutting blade faces (6b, 7b).

11. The fitting (1) according to claim 10, **characterized in that** the depth (t₁) of at least one of the depressions (10, 11) is smaller than the depth (t₂) of the groove (5a) formed in the bead (5) for receiving the sealing ring.

12. The fitting (1) according to claim 11, **characterized in that** the depth (t₁) of at least one of the depressions (10, 11) is at least two times, in particular at least five times, preferably at least ten times smaller than the depth (t₂) of the groove (5a) formed in the bead (5) for receiving the sealing ring.

13. The fitting (1) according to any one of the preceding claims, **characterized in that** the fitting (1) consists of a CuSiZn alloy which is free of lead and nickel.

14. A pressing system for connecting a pipe, in particular for the plumbing sector, comprising
- a fitting (1) according to any one of the preceding claims, and
- a pressing tool (4) that can be positioned prior to pressing and can be removed after pressing.

15. The pressing system according to claim 14, **characterized in that** the pressing tool (4) has at least two pressing jaws (12) which during pressing perpendicular to the longitudinal axis (L) can be moved toward one another, wherein at least two of the pressing jaws (12) have in each case at least two pressing bars (12a) which during pressing rest on the outside of the fitting (1) in the pressing section (3) in such a manner that the cutting blades (6, 7), in particular the cutting edges (6c, 7c), are arranged within the radial projection area (P) of the pressing bars (12a).

16. The pressing system according to claim 15, **characterized in that** only one cutting blade (6; 7), in particular only one cutting edge (6c; 7c), is arranged within the radial projection area (P) of one of the pressing bars (12a).

## Revendications

1. Raccord (1) destiné au raccordement d'un tuyau, en particulier pour l'installation,
- sachant que le raccord (1) présente un corps creux (2) s'étendant autour d'un axe longitudinal (L) dans un sens d'introduction du tuyau (X),
- sachant que le corps creux (2) présente au moins une section de compression (3) qui est déformable plastiquement dans un sens radial (Y) avec un outil de compression (4) pouvant être placé avant la compression et enlevé après la compression,
- sachant que la section de compression (3) présente une rainure (5a) pour recevoir une bague d'étanchéité,
- sachant que la section de compression (3) présente en outre au moins deux lames (6, 7) qui sont reliées fixement côté intérieur avec le corps creux (2) et présentent respectivement une arête de coupe (6c, 7c) formée par une première face de coupe (6a, 7a) et une deuxième face de coupe (6b, 7b),
**caractérisé en ce que** la section de compression (3) présente un bourrelet (5) périphérique faisant radialement saillie vers l'extérieur qui forme la rainure (5a) côté intérieur,
- sachant qu'une lame (6) est disposée avant le bourrelet (5) par rapport au sens d'introduction du tuyau (X),
- sachant qu'une autre lame (7) est disposée après le bourrelet (5) par rapport au sens d'introduction du tuyau (X).

2. Raccord (1) selon la revendication 1, **caractérisé en ce que** dans l'état non comprimé, l'angle (α) entre les deux faces de coupe (6a, 6b ; 7a, 7b) d'au moins une des lames (6, 7) fait au moins 90°, en particulier au moins 95°, de préférence au moins 100°.

3. Raccord (1) selon la revendication 1 ou 2, **caractérisé en ce que** dans l'état non comprimé, l'angle (β) entre l'une des faces de coupe (6a, 6b ; 7a, 7b), de préférence la face de coupe (6b, 7b) orientant dans le sens d'introduction du tuyau (X), d'au moins une des lames (6, 7) et l'axe longitudinal (L), fait plus de 45°, en particulier plus de 60°, de préférence plus de 75°.

4. Raccord (1) selon l'une des revendications précédentes, **caractérisé en ce que** les lames (6, 7) sont formées sur le corps creux (2) ou sont conçues de manière monobloc avec celui-ci.

5. Raccord (1) selon l'une des revendications précédentes, **caractérisé en ce que** le raccord (1) est libre de réceptions pour des bagues coupantes séparées.

6. Raccord (1) selon l'une des revendications précédentes, **caractérisé en ce que** les arêtes de coupe (6c, 7c) sont ainsi formées qu'elles coupent lors de la compression dans la surface d'un tuyau inséré dans le raccord (1).

7. Raccord (1) selon l'une des revendications précédentes, **caractérisé en ce que** précisément deux lames (6, 7) sont prévues par section de compression (3).

8. Raccord (1) selon l'une des revendications précédentes, **caractérisé en ce que** l'une face de coupe (6a, 7a) est parallèle à l'axe longitudinal (L) dans l'état non comprimé.

9. Raccord (1) selon l'une des revendications précédentes, **caractérisé en ce qu'**une section d'appui de tuyau (8, 9) respective se raccorde côté intérieur sur le bourrelet (5) sur les deux côtés, dont la surface intérieure (8a, 9a) est parallèle à l'axe longitudinal (L) dans l'état non compressé.

10. Raccord (1) selon l'une des revendications précédentes, **caractérisé en ce qu'**un creux (10, 11) respectif avec deux parois latérales (10a, 10b ; 11a, 11b) et de préférence un fond (10v ; 11c) est prévu des deux côtés du bourrelet (5) côté intérieur, sachant qu'une des parois latérales (10a, 11a) forme une des faces de coupe (6b, 7b).

11. Raccord (1) selon la revendication 10, **caractérisé en ce que** la profondeur (t₁) d'au moins un des creux (10, 11) est inférieure à la profondeur (t₂) de la rainure (5a) formée dans le bourrelet (5) pour recevoir la bague d'étanchéité.

12. Raccord (1) selon la revendication 11, **caractérisé en ce que** la profondeur (t₁) d'au moins un des creux (10, 11) est inférieure d'au moins deux fois, en particulier d'au moins cinq fois, de préférence d'au moins dix fois, à la profondeur (t₂) de la rainure (5a) formée dans le bourrelet (5) pour recevoir la bague d'étanchéité.

13. Raccord (1) selon l'une des revendications précédentes, **caractérisé en ce que** le raccord (1) est composé d'un alliage CuSiZn, exempt de plomb et de nickel.

14. Système de compression pour raccorder un tuyau, en particulier pour l'installation,
- comprenant un raccord (1) selon l'une des revendications précédentes et
- comprenant un outil de compression (4) pouvant être placé avant la compression et enlevé après la compression.

15. Système de compression selon la revendication 14, **caractérisé en ce que** l'outil de compression (4) présente au moins deux mâchoires de compression (12) qui peuvent être déplacées l'une sur l'autre verticalement à l'axe longitudinal (L) pendant la compression, sachant qu'au moins deux des mâchoires de compression (12) présentent respectivement au moins deux branches de compression (12a) qui, lors de la compression, viennent en appui de telle manière à l'extérieur du raccord (1) dans la section de compression (3) que les lames (6, 7), en particulier les arêtes de coupe (6c, 7c), sont disposées à l'intérieur de la face de projection radiale (P) des branches de compression (12a).

16. Système de compression selon la revendication 15, **caractérisé en ce qu'**une seule lame (6, 7), en particulier une seule arête de coupe (6c, 7c), est disposée à l'intérieur de la face de projection radiale (P) d'une des branches de compression (12a).
